# EUROPEAN PATENT APPLICATION

(11) **EP 4 745 582 A1**
(43) Date of publication of application: **20.05.2026**
(21) Application number: 24839505.5
(22) Date of filing: 24.06.2024
(51) Int. Cl.: G01N 35/02

(54) **AUTOMATIC ANALYSIS DEVICE**

(30) Priority: 10.07.2023 JP 2023112905
(71) Applicant: HITACHI HIGH-TECH CORPORATION, Tokyo 105-6409 (JP)
(72) Inventor: JOJI, Akira, Tokyo 105-6409 (JP)
(74) Representative: MERH-IP Matias Erny Reichl Hoffmann Patentanwälte PartG mbB
(86) International application number: PCT/JP2024/022917
(87) International publication number: WO 2025/013612

(57) **Abstract**

The misplacing of an emergent sample by an operator or an examination malfunction due to the misplacing is prevented from being caused.

[Solution]

When a sample container 103 is added to an installation mechanism 101 after analysis by an analysis unit is started, a control unit 7 performs control such that operations of the installation mechanism and a dispensing mechanism 4 are not executed. Before the dispensing operation by the dispensing mechanism is started after the sample container is added via an access unit 104, sample data is read from an identification element by a reader 105 in regard to the each sample container installed at an installation position in the installation mechanism, and the read sample data and sample data read from the identification element before the sample container is added are compared with each other.

## Description

### Technical Field

The present invention relates to an automatic analyzer.

### Background Art

The automatic analyzer can automatically univocally recognize a sample based on an identification element given to a sample container. The automatic analyzer measures measurement items requested in regard to any given sample by linking the recognized sample information with the measurement item information requested by the sample.

Patient samples used in the automatic analyzer are classified into normal samples and emergent samples. The normal sample indicates a patient sample that is measured in accordance with a preset measurement order, and the emergent sample indicates a patient sample that has a high priority in measurement and is measured preferentially by interrupting the measurement of the normal samples.

Patent Literature 1 discloses an automatic analyzer where, to allow the automatic analyzer to conveniently execute an emergent examination, in regard to a sample on which the emergent examination is performed, a rack on which the emergent sample is loaded is placed in an emergent lane.

### Citation List

### Patent Literature

Patent Literature 1: Japanese Unexamined Patent Application Publication No. 2020-126080

### Summary of Invention

### Technical Problem

As the automatic analyzer, there has been known an automatic analyzer that includes an installation mechanism in which samples are installed, and the samples are sequentially taken out from sample containers installed in the installation mechanism and an analysis is performed on the samples. In such an automatic analyzer, when an analysis starts, the installation mechanism continues an intermittent installation operation constantly. Accordingly, it is necessary to stop the operation of at least a portion of the automatic analyzer to additionally install an emergent sample. To prevent the occurrence of an inadvertent accident at the time of additionally installing an emergent sample, it is desirable that the supply of electricity to the installation mechanism and drive mechanisms around these mechanisms is stopped, thereby preventing sudden starting of movement of these mechanisms.

Accordingly, there is a possibility that an emergent sample is installed at an installation position different from a position that is set as the installation position at which the emergent sample is scheduled to be installed. This leads to a serious accident such as the mix-up of a sample or an erroneous report on a result.

It is an object of the present invention to provide an automatic analyzer that can prevent the occurrence of the misplacing of a sample container in which an emergent sample is stored into an installation mechanism by an operator, or an examination malfunction due to the misplacing of the sample container.

### Solution to Problem

According to one aspect of the present invention, there is provided an automatic analyzer that includes: an installation mechanism that is configured to be capable of installing a sample container at an installation position via an access unit; a reader that reads an identification element given to the sample container stored in the installation mechanism; a dispensing mechanism that dispenses, into a reaction vessel, a sample contained in the sample container installed in the installation mechanism; an analysis unit that analyzes the sample dispensed into the reaction vessel; and a control unit. When the control unit receives an instruction to add the sample container to the installation mechanism after the analysis by the analysis unit is started, the control unit performs control such that operations of the installation mechanism and the dispensing mechanism are not executed, and before the dispensing operation by the dispensing mechanism is started upon reception of an instruction to restart the analysis by the analysis unit when the sample container is added via the access unit, the control unit reads sample data from the identification element by the reader in regard to the each sample container installed at the installation position, and compares the read sample data and sample data read from the identification element before the sample container is added. Advantageous Effects of Invention

It is possible to provide the automatic analyzer that can prevent the occurrence of the misplacing of an emergent sample by an operator and an examination malfunction due to the misplacing. Other problems and the novel features of the present invention will become apparent from the description of the specification and the attached drawings.

### Brief Description of Drawings

FIG. 1 is an overview diagram illustrating a basic configuration of an automatic analyzer.
FIG. 2A is a diagram for explaining a problem at the time of emergent sample installation.
FIG. 2B is a diagram for explaining a problem at the time of emergent sample installation.
FIG. 2C is a diagram for explaining a problem at the time of emergent sample installation.
FIG. 3 is a sample information comparison flowchart after the emergent sample installation according to a first embodiment.
FIG. 4 is a rotation detection flowchart of an installation mechanism at the time of the emergent sample installation according to a second embodiment.

### Description of Embodiments

The mode for carrying out the present invention will be described with reference to drawings. However, the mode is merely an example of the present invention, and the present invention is not limited to an embodiment described hereinafter, and includes various modifications. For example, the embodiment described hereinafter is described in detail for facilitating the understanding of the present invention, and is not necessarily limited to the embodiment that includes all configurations described above. A part of the configuration of one embodiment may be replaced with the configurations of other embodiments, and the configurations of other embodiments may be added to the embodiment. In regard to parts of the configuration of each embodiment, the addition, the deletion, or the replacement of the configurations of other embodiments is possible.

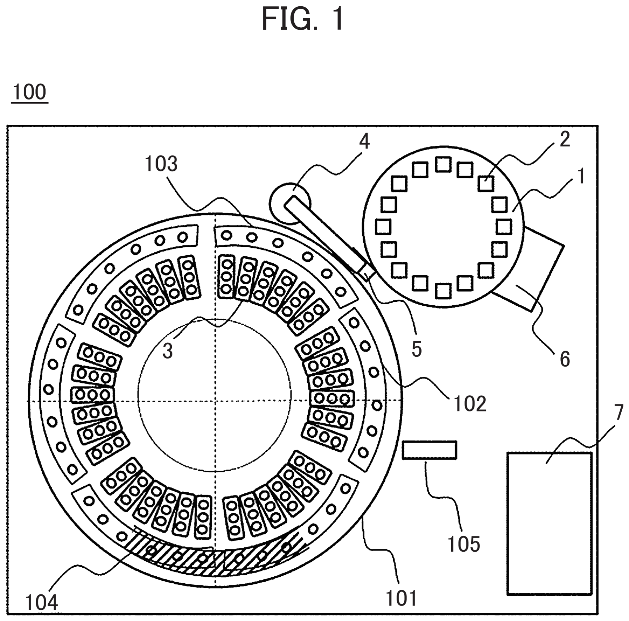

Fig. 1 is a view illustrating a plan view of an automatic analyzer 100 in a simplified manner. Reaction vessels 2 are disposed at positions arranged on a circumference of a reaction disc that constitutes an incubator 1. The same reaction vessels 2 are used for all reactions. The incubator 1 is controlled so as to be rotatably driven by a drive mechanism such as a motor.

In the automatic analyzer, as a typical method of an installation mechanism (including a function of conveying a vessel) on which sample containers are installed, a rack method and a disk method are known. The rack method is favorably used in a collective analysis of a plurality of sample containers, and the disk method is favorably used in an analysis of an individual sample container. Fig. 1 illustrates an example of an installation mechanism adopting a disk method. The installation mechanism 101 has a disk shape, and can store a plurality of sample containers 103 in each of which a sample is stored, and a plurality of reagent bottles 3. Accordingly, the installation mechanism 101 is also referred to as a sample/reagent disk. The reagent bottle 3 is constituted by connecting a plurality of (three in this embodiment) reagent containers each containing a reagent. In this example, six sample racks 102 each having an arc shape and holding sample containers 103 are arranged along an inner periphery of the installation mechanism 101. Each sample rack 102 is provided with a plurality of installation positions for installing the respective sample containers 103. Alternatively, in place of a rack, for example, the configuration may be adopted where a holding member that holds an annular sample container along an inner periphery of the installation mechanism 101 is provided, and installation positions where the sample containers 103 are installed may be disposed in the holding member. 36 pieces of reagent bottles 3 are arranged and stored radially inside the sample rack 102 (or the holding member). The method of installing the reagent bottles 3 and the sample containers 103 is not limited to the method illustrated in the drawing, and the configuration may be adopted where the sample containers 103 are installed inside the reagent bottles 3. Still another configuration may be adopted where the reagent bottles 3 and the sample containers 103 are divided in the circumferential direction instead of the radial direction. Further, in this embodiment, an example is illustrated where the installation mechanism 101 constitutes a storage unit shared by the reagents and samples. However, a storage unit for storing reagents and a storage unit for storing samples may be separately provided. The details of the installation mechanism 101 will be described later.

A dispensing mechanism 4 that includes a dispensing nozzle is installed between the incubator 1 and the installation mechanism 101. The dispensing mechanism 4 can perform a circular (rotation) movement and a vertical movement. The dispensing nozzle moves along an arc about an axis of rotation, and performs dispensing from the reagent bottle 3 or the sample container 103 to the reaction vessel 2. On a trajectory of the dispensing nozzle, a reagent aspiration position and a sample aspiration position on the installation mechanism 101, a dispensing position on the incubator 1, and a cleaning tank 5 for cleaning the dispensing nozzle exist. A sample and a reagent are aspirated by the dispensing nozzle, and the sample and the reagent are stirred and mixed by an aspiration and discharge operation in the reaction vessel 2 by the dispensing nozzle. By performing the stirring of the sample and the reagent by a pipetting operation using the dispensing nozzle, a stirring mechanism for stirring the sample and the reagent can be eliminated.

The reaction vessel 2 that stores a reaction solution generated by mixing a sample and a reagent is controlled at a predetermined temperature by the incubator 1, and the reaction is promoted for a predetermined time. In a case where the automatic analyzer 100 is used in a biochemical examination, a spectrophotometer (biochemical analysis unit) 6 is disposed around the incubator **1.** The spectrophotometer 6 includes a light source and a detection unit. For example, the spectrophotometer 6 measures an absorbance of a reaction solution that is a mixture of a sample and a reagent by irradiating light from a light source to a reaction solution and by detecting a transmitted light obtained by such spectrophotometry.

The automatic analyzer 100 according to the embodiment is not limited to the exemplified automatic analyzer for the biochemical examination. For example, the automatic analyzer may be used in the immunological examination. In this case, the spectrophotometer 6 is unnecessary, and the automatic analyzer includes an immunology analysis unit instead. The immunology analysis unit uses electrochemical luminescence or chemical luminescence as a principle, and measures, for example, an amount of luminescence derived from a labeling substance luminescent reaction by using a photoelectron multiplier as a detector. Further, the automatic analyzer 100 may be a composite type used for biochemical examination and immunological examination. In this case, the automatic analyzer 100 includes both the spectrophotometer 6 and the immunology analysis unit.

The respective mechanisms of the automatic analyzer 100 are connected to a control unit 7. The control unit 7 controls operations such as a rotational drive of the incubator 1, a rotational operation in the installation mechanism 101, a dispensing operation performed by the dispensing mechanism 4, and cleaning of a dispensing nozzle of the cleaning tank 5. The control unit 7 has a central processing unit (CPU), and a display unit that functions as an input/output unit. By using a touch panel, for example, as the display unit, a display screen functions also as an input unit. For example, as described later, in a case where the interrupt is performed for measurement of an emergent sample, when an operator presses an emergent sample measurement mode button displayed on the display unit, an interrupt process is executed. In Fig. 1, to simplify the illustration by the drawing, the connection between the respective mechanisms that constitute the automatic analyzer and the control unit 7 is omitted.

The details of the installation mechanism 101 are described. In an actual structure, the installation mechanism 101 includes a cover for cooling the inside of the installation mechanism 101, and a lid is provided at the position of a cover that corresponds to an access unit 104. Taking in and out of the sample rack 102 or the sample container 103 can be performed by opening and closing the lid disposed on the access unit 104. As illustrated in Fig. 1, a storage unit of the installation mechanism 101 has a disc shape. The samples are disposed on an outer peripheral portion of the storage unit, and the reagents are disposed in an inner peripheral portion of the storage unit. The control unit 7 performs a rotational control using the center of the storage unit as an axis of rotation. Accordingly, the sample container 103 and the reagent bottle 3 are moved to the required position. A rotation sensor that detects a rotation amount of the storage unit is disposed in the installation mechanism 101 for a rotation control. The rotation sensor monitors an actual rotation amount of the storage unit in response to an operation instruction from the control unit 7.

In the automatic analyzer that includes the installation mechanism of a disc method, an operator usually performs an operation of arranging the sample container 103 to the installation position in the installation mechanism 101 in a state where the operation of the automatic analyzer 100 is preliminarily stopped before the automatic analyzer 100 starts an analysis. Then, the operator sets information such as requested measurement items (measurement requested data) to the sample stored in the sample container 103 disposed in the automatic analyzer 100, and inputs an analysis start instruction. Upon receiving the analysis start instruction, the automatic analyzer 100 starts an analysis operation to the sample containers 103 disposed in the installation mechanism 101.

To be more specific, after receiving the measurement start instruction, the automatic analyzer 100 reads, by a reader 105, an identification element (bar code, RFID or the like) attached to the sample container 103 for recognizing the sample installed in the installation mechanism 101. ID data that the reader 105 reads is transmitted to the control unit 7, and is linked with the registered measurement request data. The control unit 7 outputs a sample measurement operation indication to the automatic analyzer 100 based on the ID data and the measurement request data that are linked with each other. Hereinafter, the description is made using ID data as a representative of sample data that identifies the sample. However, in a case of a calibrator or a control sample having no ID data, the sample can be identified using sample kind information.

Once the automatic analyzer 100 starts the analysis, each time the dispensing of a sample or a reagent becomes necessary, the installation mechanism 101 performs the rotational operation. During the analysis operation, the storage units of the installation mechanism 101 intermittently repeat the rotational movement, and do not stop the rotational movement until the analysis operation of all sample containers 103 installed on the installation mechanism 101 is completed. Accordingly, during the analysis operation, usually, an operator cannot additionally add new sample containers to the installation mechanism 101. However, there may be a case where the sample that requires the emergent measurement by the automatic analyzer 100 appears although the sample is not stored in the installation mechanism 101. For example, as such a sample, an emergent sample that is requested to be measured with a higher priority than to a normal sample, or a calibrator or a control sample for properly ensuring measurement accuracy are named.

To allow an operator to install the sample container 103 on the installation mechanism 101 after the analysis starts, it is necessary for the operator (1) to wait for the completion of the analysist to all existing sample containers 103 or (2) to perform an interrupt. To additionally install the sample container 103 in the installation mechanism 101 by an interrupt, it is necessary to stop the operation of the entire automatic analyzer 100 or the operations of some units of the automatic analyzer 100. In the above-mentioned operations, the operations of some units of the automatic analyzer 100 mean the operation of the installation mechanism 101, and the operations of mechanisms that are disposed in the vicinity of the installation mechanism 101 and access the installation mechanism 101 such as the operation of the dispensing mechanism, for example. The reason that these mechanisms are to be stopped lies in a concern that the safety and the like of an operator and the samples cannot be secured during an operation. For example, when a finger of an operator comes into contact with a distal end of a dispensing probe, there is a concern that the operator is injured or the operator is infected with a kind of pathogens. Further, there also exists a concern that a distal end portion of a dispensing probe is contaminated, thereby affecting an analysis. Further, there also exists a concern that the sample container 103 contacts with the mechanism in motion so that the sample container 103 is broken.

To enable an operator to additionally install a new sample container to the installation mechanism 101 during an analysis operation, the automatic analyzer 100 has a function of setting arbitrary one sample rack out of sample racks 102 stored in the installation mechanism 101 preliminarily as an additional rack for the new sample containers (hereinafter referred to as an emergent rack). Alternatively, in a case where the automatic analyzer 100 uses a circular holding member, the automatic analyzer 100 has a function of setting an installation position within a predetermined range of the holding member as an emergent sample installation position. In the above-mentioned configuration, the emergent rack is a term set in terms of control performed by the control unit 7. Accordingly, no discrimination points in terms of appearance exist between the emergent rack and the sample racks 102 other than the emergent rack. The same goes for the holding member, and the emergent rack and the emergent sample installation position are collectively referred to as an additional sample installation region. Both the emergent rack and the holding member share substantially the same point that both of them include at least one installation position at which the additional sample container is installed. Hereinafter, unless otherwise specified, the description is made by exemplifying the case where the sample rack 102 is used. The additional sample installation region may be fixedly set in the automatic analyzer 100, or may be arbitrarily designated by an operator at the time of starting an analysis.

When the control unit 7 receives pressing of an emergent sample measurement mode button performed by an operator, the control unit 7 shifts an operation mode to a state where the installation mechanism 101 safely stores the new sample container 103 in the emergent rack (hereinafter referred to as a short turn around time (STAT) mode).

To be more specific, in a case where a sample such as an emergent sample (hereinafter, the description being made using the emergent sample as an example) is additionally installed in the installation mechanism 101 during the sample measurement, an operator informs the control unit 7 of the additional installation of the emergent sample by pressing an emergent sample measurement mode button. Upon reception of pressing of the emergent sample measurement mode button, the control unit 7 outputs an instruction to the automatic analyzer 100 so that the automatic analyzer 100 stops the dispensing of a new sample. To prevent a sample and a reagent being used in measurement from being wasted, the automatic analyzer 100 performs a control such that, after a reserved process of an analysis operation is completed, the installation mechanism 101 rotatably moves the emergent rack to the position of the access unit 104 and, thereafter, the installation mechanism 101 and the mechanisms around the installation mechanism 101 are not operated, and notifies the control unit 7 that the automatic analyzer 100 is in an emergent sample installation allowable mode (STAT mode). Accordingly, the control unit 7 prompts an operator to install an emergent sample.

When the emergent sample becomes installable, the operator takes out the sample rack 102 registered as an emergent rack via the access unit 104, installs the sample containers 103 that store the emergent samples on the taken-out emergent rack, and mounts the emergent rack on the installation mechanism 101 again via the access unit 104. When the installation of the emergent sample is finished, an operator sets measurement request data requested by the emergent samples to the automatic analyzer 100, and outputs a measurement restart instruction.

In restarting the measurement, as a comparison example, the automatic analyzer 100 that receives the measurement restart instruction performs, using the reader 105, reading of information relating to the sample containers 103 set on the emergent rack. To allow the automatic analyzer 100 to perform an analysis of the sample, it is necessary to link ID data registered on identification elements attached to the sample containers 103 and the registered measurement request data with each other. In the comparison example, by performing reading of information relating to the sample containers 103 installed in the emergent rack being taken in and out from the installation mechanism 101 for installation of the emergent samples, it is possible to update ID data of the sample containers 103 installed in the sample rack 102 taken out from the installation mechanism 101 once. ID data that the reader 105 reads is transmitted to the control unit 7, and is linked with the registered measurement request data. The control unit 7 outputs a measurement operation instruction relating to the emergent sample to the automatic analyzer 100 based on the ID data and the measurement request data that are linked with each other. After the emergent samples are measured, the measurement of the normal samples that has been interrupted is restarted.

However, the manner of operation adopted by the comparison example has a concern that mix-up of samples or an erroneous report of the measurement result occurs. As described above, the emergent rack (additional sample installation region) is a term set in terms of control performed by the control unit 7. Accordingly, no discrimination points in terms of appearance do exist between the emergent rack and the sample racks 102 other than the emergent rack. Further, depending on a sample examination request situation at a certain point of time, the sample container 103 that stores the normal sample is also stored in the emergent rack. That is, the additional sample installation region is not a region dedicated to the sample containers installed additionally, and the normal samples are also installed without any particular restriction. Accordingly, an operator cannot identify from appearance whether or not the rack is the emergent rack. Under such circumstances, when a power supply to the drive mechanism for rotatably operating the installation mechanism 101 is shut down to prevent an inadvertent accident in a STAT mode, for example, an operator erroneously touches the storage unit. In this case, there is a concern that the position of the emergent rack that is positioned at the access unit is displaced so that the sample rack that differs from the emergent rack is taken out and the emergent sample is installed in the take-out sample rack.

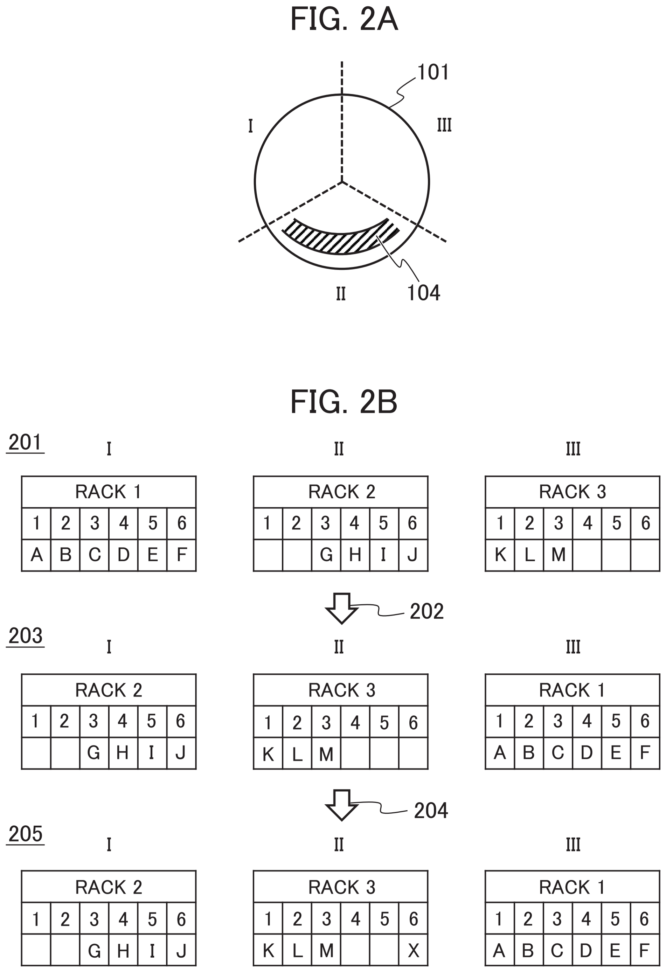

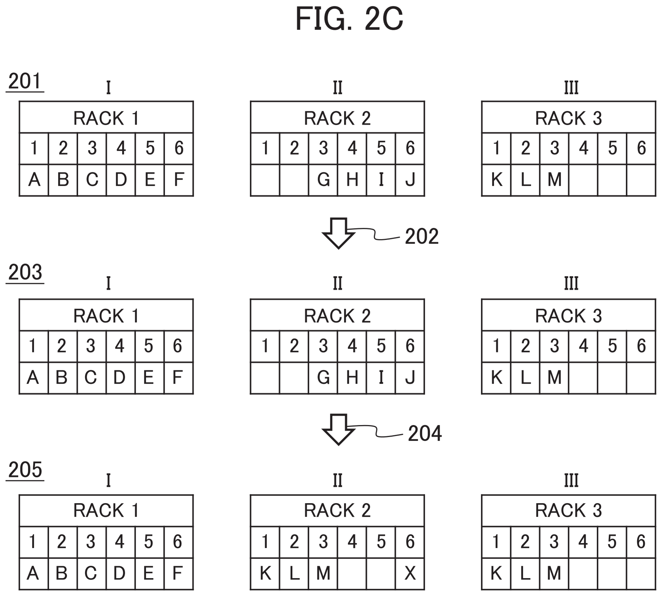

The manner of operation of the automatic analyzer 100 is specifically described with reference to Fig. 2A to Fig. 2C. Fig. 2A illustrates the installation mechanism 101 capable of mounting three sample racks 102 (racks 1 to 3). Assume that three sample racks 102 are mounted in regions I to III respectively. An access unit 104 is disposed in the region II. In each sample rack 102, six sample containers 103 can be installed. The rack 2 is set as the emergent rack. Fig. 2B illustrates the installation state of the sample containers in the installation mechanism 101, and Fig. 2C illustrates the installation state of the sample containers in the installation mechanism 101 recognized by the control unit 7. In each Table, the racks are illustrated on an upper shelf, the installation positions of the sample containers 103 are illustrated in a middle shelf, and sample IDs (A to M) of the sample containers 103 installed at the installation positions are illustrated in a lower shelf.

A state 201 is the state where the automatic analyzer 100 is shifted to the STAT mode so that a state is brought about where an emergent sample can be installed. In this state, the actual installation state illustrated in Fig. 2B and installation state under a control illustrated in Fig. 2C agree with each other. When an operator erroneously rotates the storage unit in a clockwise direction (202), a state 203 is brought about. The state 203 is a state where the arrangement of the sample rack 102 is displaced (see Fig. 2B). On the other hand, in the STAT mode, the normal rotation sensor is not operated. Accordingly, the control unit 7 cannot recognize this change and hence, there is no change in regard to the installation state under control with reference to Fig. 2C between the state 201 and the state 203. An operator takes out the rack 3 via the access unit 104, installs the emergent sample X, and mounts the rack 3 on the installation mechanism 101 again (204). This state is a state 205 illustrated in Fig. 2B. The control unit 7 updates sample rack ID data of the sample rack 102 that is mounted via the access unit 104. This state is the state 205 illustrated in Fig. 2C.

In this manner, when the examination is continued in a state where the actual installation state illustrated in Fig. 2B and the installation state under control illustrated in Fig. 2C do not agree with each other, for example, there is a concern that analysis data outputted as an analysis result of a sample C is actually analysis data that is outputted by analyzing a sample G

### Fist Embodiment

In the first embodiment, before a measurement operation is restarted after installing an emergent sample by an interrupt, the sample containers are scanned in regard to the respective installation positions, sample data read from the identification elements are compared before and after the addition of the sample container, and when the deviation occurs between the sample data before and after the addition of the sample container, an operator is notified with the deviation.

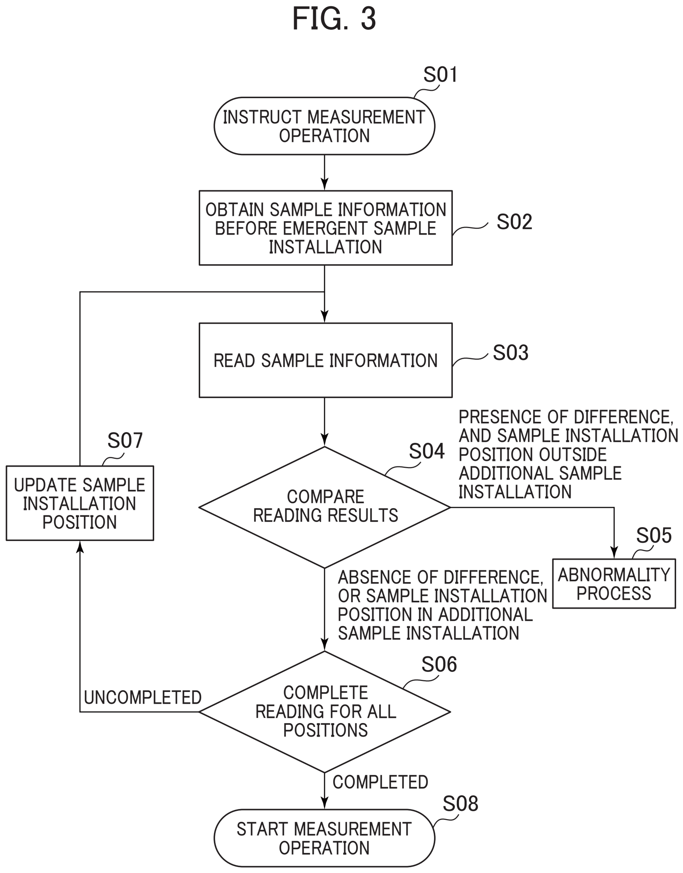

Fig.3 is a flowchart after an operator installs an emergent sample in a STAT mode and outputs a measurement operation instruction again. First, the operator who installs the emergent sample instructs a measurement operation again (S01). The control unit 7 obtains, at a certain installation position, ID data of the installation mechanism 101 that is read at the time of reading the sample before the installation of the emergent sample (S02). Subsequently, the reader 105 reads the identification element of the sample container 103 at the installation position (S03). Next the control unit 7 collates ID data read by the reader 105 with ID data obtained in step S02 (S04). When it is determined that the installation position is outside the additional sample installation region and the difference is found as a result of the collation, an abnormality process is performed (S05). In the abnormality process (S05), the measurement is not started, and a process of notifying an operator of the occurrence of the replacement of the sample is performed. On the other hand, in a case where it is determined that there is no difference in the installation position or the installation position is within the additional sample installation region, it is determined whether or not the reading of the identification element of the sample container 103 is completed in regard to all installation positions of installation mechanism 101 (S06). When the reading of the identification element of the sample container 103 has not been completed as the result of the determination, the installation position is updated (S07), and the reading of the sample information is executed (S03). In a case where it is determined that the reading of sample information at all installation positions is completed in step S06, a dispensing operation performed by the dispensing mechanism 4 is started, and the measurement operation is restarted (S08).

In this manner, at the time of restarting after the emergent sample installation, the sample information is read not only in regard to the installation position in the additional sample installation region (sample rack where the emergent sample is installed in case of the comparison example) but also in regard to all installation positions of the installation mechanism 101 including the normal sample installation position, and the sample information is compared or collated before and after the addition of the sample container. As a result, it is possible to detect whether or not the replacement of the sample other than the emergent sample at the time of installing the emergent sample has occurred. Accordingly, erroneous replacement of the sample can be detected before performing an analysis and hence, the mix-up of the sample or an erroneous report on a measurement result can be prevented.

### Second Embodiment

In the second embodiment, the automatic analyzer 100 is configured to prevent the occurrence of a state where an operator rotates an installation mechanism 101 in installing an emergent sample and takes out a sample rack other than an emergent rack, or the occurrence of a state where a sample container that stores an emergent sample is installed at an installation position other than an emergent sample installation position of a holding member.

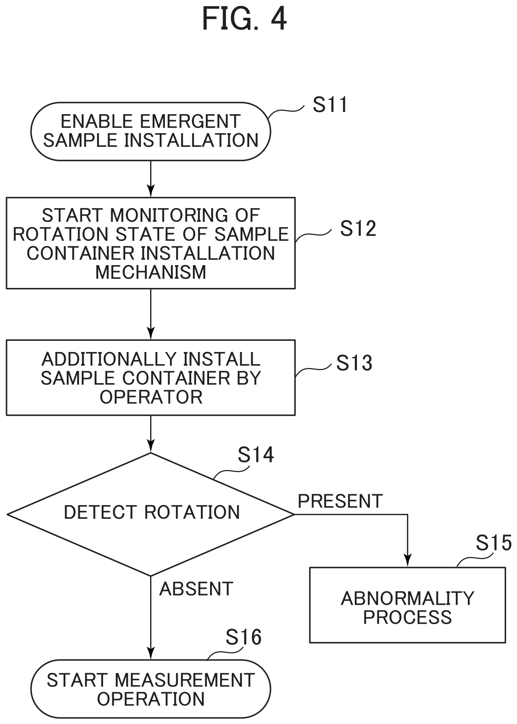

Fig. 4 is a flowchart of the detection of the rotation of the installation mechanism 101 in a STAT mode. When the automatic analyzer 100 is shifted to a STAT mode and a timing at which an operator can install an emergent sample arrives (S11), the control unit 7 starts monitoring by a rotary sensor used in a rotation control of the installation mechanism 101 (S12). Then, the operator installs an emergent sample (S13). During this period, the monitoring of the rotation of the installation mechanism 101 started in step S12 is continued. In a case where the installation mechanism 101 rotates and the rotation sensor detects the rotation that is greater than or equal to a threshold (Yes in S14), an abnormality process is performed (S15). In a case where the rotation sensor does not detect the rotation that is greater or equal to the threshold (No in S14), it is determined that the installation mechanism 101 has not rotated, and the measurement operation is started after the installation of the emergent sample (S16).

In this manner, by performing the detection of the rotation using the rotation sensor for the rotation control when installing the emergent sample, an unintended rotation of the installation mechanism 101 can be detected without increasing a raw material cost and an analyzer unit cost, and the erroneous taking out of the sample rack and an erroneous installation of an emergent sample can be prevented.

### List of Reference Signs

1: incubator, 2: reaction vessel, 3: reagent bottle, 4: dispensing mechanism, 5: cleaning tank, 6: spectrophotometer, 7: control unit, 100: automatic analyzer, 101: installation mechanism, 102: sample rack, 103: sample container, 104: access unit, 105: reader

## Claims

1. An automatic analyzer comprising:
an installation mechanism that is configured to be capable of installing a sample container at an installation position via an access unit;
a reader that reads an identification element given to the sample container stored in the installation mechanism;
a dispensing mechanism that dispenses, into a reaction vessel, a sample contained in the sample container installed in the installation mechanism;
an analysis unit that analyzes the sample dispensed into the reaction vessel; and
a control unit,
wherein when the control unit receives an instruction to add the sample container to the installation mechanism after the analysis by the analysis unit is started, the control unit performs control such that operations of the installation mechanism and the dispensing mechanism are not executed, and
wherein before the dispensing operation by the dispensing mechanism is started upon reception of an instruction to restart the analysis by the analysis unit when the sample container is added via the access unit, the control unit reads sample data from the identification element by the reader in regard to the each sample container installed at the installation position, and compares the read sample data and sample data read from the identification element before the sample container is added.

2. The automatic analyzer according to claim 1,
wherein an additional sample installation region including at least one installation position for additionally installing the sample container in the installation mechanism during the analysis by the analysis unit is set to the installation mechanism, and
wherein when the control unit receives the instruction to add the sample container to the installation mechanism after the analysis by the analysis unit is started, the control unit performs control such that the operations of the installation mechanism and the dispensing mechanism are not executed after the installation mechanism is operated such that the additional sample installation region is positioned at the access unit.

3. The automatic analyzer according to claim 2,
wherein the control unit performs an abnormality process when in regard to the sample container installed at an installation position outside the additional sample installation region of the installation mechanism, there is a difference between the sample data read from the identification element by the reader before and after the sample container is added.

4. The automatic analyzer according to claim 2,
wherein a plurality of sample racks provided with a plurality of installation positions are mounted on the installation mechanism, and
wherein the control unit sets, as the additional sample installation region, any one of the plurality of mounted sample racks.

5. The automatic analyzer according to claim 1,
wherein an emergent sample that is required to be analyzed with a higher priority than a normal sample is contained in the sample container to be added.

6. An automatic analyzer comprising:
an installation mechanism that installs a sample container at an installation position and includes an access unit;
a reader that reads an identification element given to the sample container stored in the installation mechanism;
a dispensing mechanism that dispenses, into a reaction vessel, a sample contained in the sample container installed in the installation mechanism;
an analysis unit that analyzes the sample dispensed into the reaction vessel; and
a control unit,
wherein the installation mechanism performs a rotation operation, and includes a rotation sensor that detects a rotation amount of the installation mechanism,
wherein when the control unit receives an instruction to add the sample container to the installation mechanism after the analysis by the analysis unit is started, the control unit performs control such that the rotation operation of the installation mechanism and the dispensing operation of the dispensing mechanism are not executed, and performs control such that a rotation state of the installation mechanism is monitored by the rotation sensor, and
wherein the control unit performs an abnormality process when rotation of more than a predetermined amount in the installation mechanism is detected by the rotation sensor by the time that the sample container is added via the access unit and the control unit receives an instruction to restart the analysis by the analysis unit.

7. The automatic analyzer according to claim 6,
wherein an additional sample installation region including at least one installation position for additionally installing the sample container in the installation mechanism during the analysis by the analysis unit is set to the installation mechanism, and
wherein after the installation mechanism is operated such that the additional sample installation region is positioned at the access unit, the control unit performs control such that the rotation operation of the installation mechanism and the operation of the dispensing mechanism are not executed.

8. The automatic analyzer according to claim 7,
wherein a plurality of sample racks provided with a plurality of installation positions are mounted on the installation mechanism, and
wherein the control unit sets, as the additional sample installation region, any one of the plurality of mounted sample racks.

9. The automatic analyzer according to claim 6,
wherein an emergent sample that is required to be analyzed with a higher priority than a normal sample is contained in the sample container to be added.
